# EUROPEAN PATENT APPLICATION

(11) **EP 4 678 324 A1**
(43) Date of publication of application: **14.01.2026**
(21) Application number: 24904185.6
(22) Date of filing: 06.12.2024
(51) Int. Cl.: B23K 11/11, B23K 11/24, B23K 11/36, B23K 37/04, G01B 21/06, H01M 10/04, H01M 50/528

(54) **WELDING APPARATUS FOR CYLINDRICAL BATTERY HAVING WELDING ROD OVERLAP MEASURING UNIT**

(30) Priority: 12.12.2023 KR 20230179995
(71) Applicant: LG Energy Solution, Ltd., Seoul 07335 (KR)
(72) Inventor: KIM, Seong Kyu, Daejeon 34122 (KR)
(74) Representative: Goddar, Heinz J.
(86) International application number: PCT/KR2024/019931
(87) International publication number: WO 2025/127620

(57) **Abstract**

Disclosed is a welding apparatus including an upper welding unit including an upper welding rod, a first object to be joined located under the upper welding rod, a second object to be joined located under the first object to be joined, and a lower welding unit including a lower welding rod located under the second object to be joined, wherein the first object to be joined and the second object to be joined are welded to each other by resistance welding using the upper welding rod and the lower welding rod, and a displacement measurement unit configured to measure the displacement of a buffer portion provided on at least one of an upper end of the upper welding rod or a lower end of the lower welding rod by further pressing in the state in which the upper welding rod, the first object to be joined, the second object to be joined, and the lower welding rod face each other in tight contact with each other.

## Description

### [Technical Field]

The present invention relates to a cylindrical battery welding apparatus with a welding rod overlap measurement unit. More particularly, the present invention relates to a cylindrical battery welding apparatus provided with a welding rod overlap measurement unit capable of checking the degree of tight contact between welding rods that come into contact with each other at an upper surface and a lower surface of the bottom of a cylindrical can of a cylindrical battery cell when resistance welding the cylindrical can and a negative electrode tab of the cylindrical battery cell.

### [Background Art]

A lithium secondary battery includes an electrode assembly in which a positive electrode coated with a positive electrode active material, a negative electrode coated with a negative electrode active material, and a separator located between the positive electrode and the negative electrode are stacked, the separator being configured to prevent short circuit and to allow migration of lithium ions (Li-ions), a battery case configured to receive the electrode assembly, and an electrolyte solution injected into the battery case to allow migration of lithium ions therethrough.

Depending on the shape of the battery case, the lithium secondary battery is classified as a cylindrical battery having an electrode assembly mounted in a cylindrical metal can, a prismatic battery having an electrode assembly mounted in a prismatic metal can, or a pouch-shaped battery having an electrode assembly mounted in a pouch-shaped case made of an aluminum laminate sheet. The cylindrical battery has the advantage of relatively high capacity and structural safety.

The cylindrical battery is manufactured by receiving a jelly-roll electrode assembly, which is configured such that a positive electrode sheet and a negative electrode sheet are wound in the state in which a separator sheet is interposed therebetween, in a cylindrical battery case and sealing the cylindrical battery case. The jelly-roll electrode assembly is received in the cylindrical can, and a negative electrode tab located at a lower part of the jelly-roll electrode assembly is welded to an inner bottom of the cylindrical can.

Typically, the negative electrode tab of the cylindrical battery is resistance welded to the bottom of the cylindrical can. The negative electrode tab is located at the inner bottom of the cylindrical battery. When a laser is applied to the negative electrode tab, therefore, the laser may reach other parts of the jelly-roll electrode assembly. For this reason, resistance welding is performed in many cases. A positive electrode tab is often welded to a top cap by laser welding. For the pouch-shaped battery, laser welding is also used to weld an electrode tab and an electrode lead to each other.

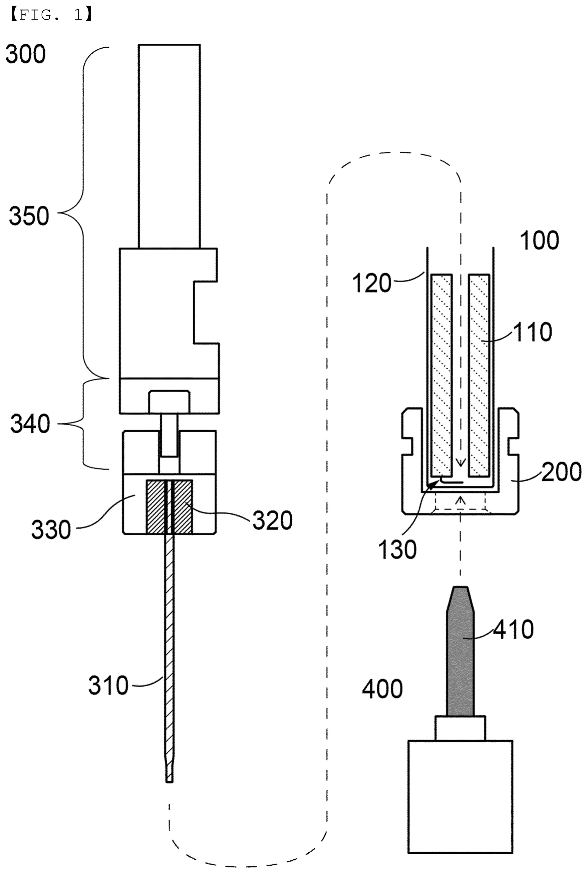

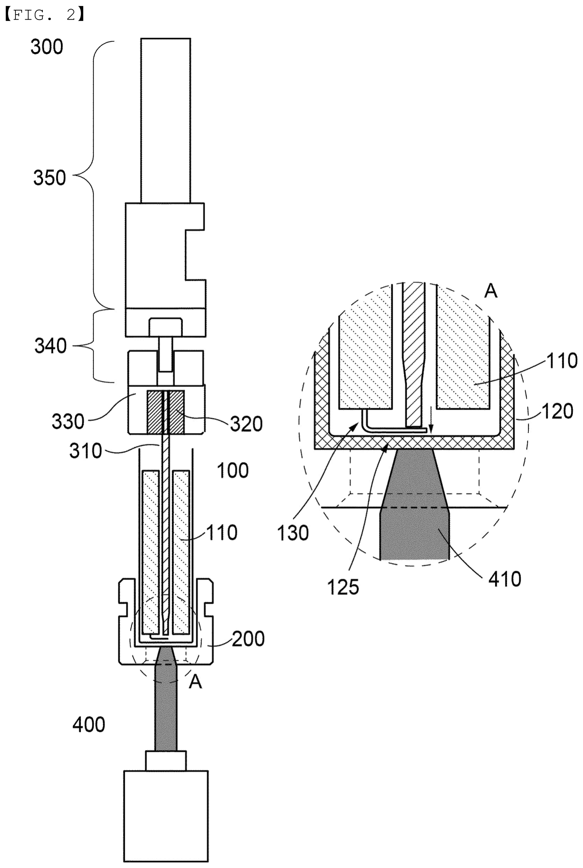

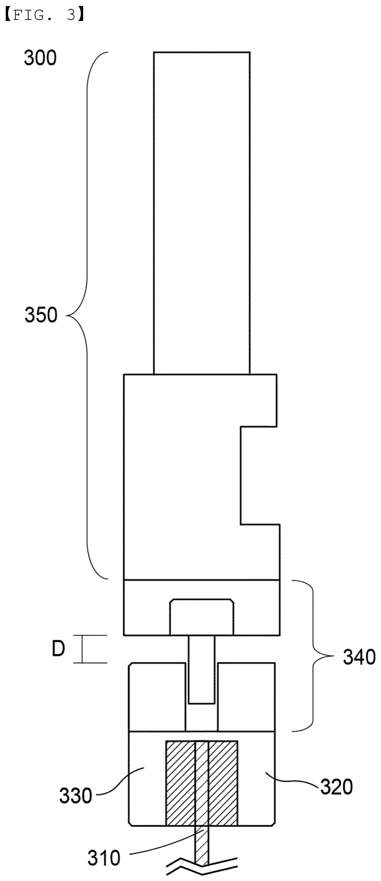

FIG. 1 is an exploded sectional view of a cylindrical battery and a conventional resistance welding apparatus, FIG. 2 is a sectional view showing that welding is performed in the state in which the conventional resistance welding apparatus is coupled to the cylindrical battery, and FIG. 3 is a schematic view of an upper part of the conventional resistance welding apparatus.

The conventional resistance welding apparatus will be described with reference to FIGs. 1 to 3. The cylindrical battery 100 has a jelly-roll electrode assembly 110 received in a cylindrical can 120. A negative electrode tab 130 protrudes from a lower part of the jelly-roll electrode assembly 110. For reference, a positive electrode tab is omitted from FIGs. 1 to 3. The cylindrical battery 100 is fixed to a jig 200 for resistance welding.

The conventional resistance welding apparatus includes an upper welding unit 300 including an upper welding rod 310, and a lower welding unit 400 including a lower welding rod 410. Before resistance welding, the cylindrical battery 100 is received in the jig 200 in the state in which the upper welding unit 300 and the lower welding unit 400 are vertically spaced apart from each other. Subsequently, the upper welding unit 300 is moved downward and the lower welding unit 400 is moved upward, whereby the upper welding rod 310, the negative electrode tab 130, the cylindrical can 120, and the lower welding rod 410 are disposed in an inner lower region of the cylindrical can 120 in that order.

For welding, the upper welding rod 310 and the lower welding rod 410 need to be in tight contact with each other. For resistance welding, the upper welding rod 310 and the lower welding rod 410 must be pressed. Once the upper welding rod 310, the negative electrode tab 130, the cylindrical can 120, and the lower welding rod 410 are physically in tight contact with each other, no further movement is possible. For resistance welding, however, the upper welding rod 310, the negative electrode tab 130, the cylindrical can 120, and the lower welding rod 410 must be in tight contact with each other, and welding quality depends on the degree of tight contact.

The upper welding rod 310 is fixed to a welding rod jig 320, and is fixed to a welding rod receiving portion 330 provided at a lower part of the upper welding unit 300. A buffer portion 340 is present between a welding unit body 350 provided above and configured to fix and move the entirety of the upper welding unit 300 and the welding rod receiving portion 330.

Since the upper welding rod 310 and the lower welding rod 410 are required to be in tight contact with each other, the degree of tight contact is expressed using the term "overlap." Since the upper welding rod 310 and the lower welding rod 410 cannot physically overlap each other, the overlap may be expressed as follows.

In the absence of the cylindrical can, the upper welding rod 310 is moved downward and the lowest position of the upper welding rod is measured or set. The welding unit body 350 may be provided with a controller, which may store the position of the welding rod. The upper welding portion 310 is moved back upward, the lower welding portion 410 is moved upward, and the highest position of the lower welding rod is measured or set. At this time, the set position of each of the upper welding rod 310 and the lower welding rod 410 is substantially the position where the end of the upper welding rod 310 and the end of the lower welding rod 410 overlap each other. Since the end of the upper welding rod 410 and the end of the lower welding rod 410 cannot physically overlap each other, the upper welding rod 310 is retracted by the buffer portion 340 to that extent. Depending on the degree of retraction, the tension applied to the buffer portion 340 varies, and the greater the degree of retraction, the higher the tension. That is, if the overlap section is preset, it is possible to adjust the tension applied to the upper welding rod 310 and the lower welding rod 410, and therefore it is possible to adjust the degree of tight contact between the upper welding rod 310, the negative electrode tab 130, the cylindrical can 120, and the lower welding rod 410.

The conventional resistance welding apparatus has the buffer portion 340, but does not directly determine the actual degree of buffering. Before welding, the overlap section is set through the above process and welding is performed accordingly.

Since jelly-roll electrode assemblies of cylindrical batteries are not the same, the shape and position of the negative electrode tab 130 may be different, and the extent to which the jelly-roll electrode assembly is inserted into the cylindrical can may be different, and furthermore, the extent to which the cylindrical battery 100 is fixed to the jig 200 may be different. If the overlap section is set according to one consistent criterion and welding is performed accordingly, therefore, it is not possible to determine the degree of welding quality of each cylindrical battery. In addition, welding is performed several times using a single welding rod, and therefore the length of the rod varies as welding is repeatedly performed. Furthermore, the tension of a spring in the buffer portion may change, and the actual pressure applied may not be the same even if the length of the overlap section is set as conventionally.

Conventionally, a specific means capable of clearly identifying such a problem is not provided except for operator's observation.

Patent Document 1 discloses a dissimilar metal joining method and a dissimilar metal joining apparatus including an upper and lower electrode configured to perform welding and a distance sensor located at the side of the upper electrode. In Patent Document 1, the change in distance to an object to be joined is directly measured as welding is performed and whether welding has been completed is determined based on the degree of this change. In the case of the present invention, resistance welding is performed in a very short period of time as welding, and the dimensions of the object to be joined change very little due to welding. In the case of the present invention, the distance change is not measured while welding is performed, but the degree of overlap is determined in advance and welding is simply carried out accordingly, and therefore the configuration of D1 that checks the change in real time cannot be applied.

Patent Documents 2 to 4 also do not suggest a buffer portion corresponding to the main configuration of the present invention and the configuration for checking the displacement thereof.

As such, the prior art documents lack a means capable of checking or measuring the degree of overlap, which is an important factor in resistance welding of a cylindrical battery.
Japanese Patent Application Publication No. 2008-284570 ("Patent Document 1")
Japanese Patent Application Publication No. 2020-019060 ("Patent Document 2")
Korean Utility Model Publication No. 0259892 ("Patent Document 3")
Chinese Patent Application Publication No. 115815769 ("Patent Document 4")

### [Disclosure]

### [Technical Problem]

The present invention has been made in view of the above problems, and it is an object of the present invention to provide a means capable of checking or measuring the degree of overlap, which is an important factor in resistance welding of a cylindrical battery.

### [Technical Solution]

In order to accomplish the above object, the present invention provides a welding apparatus including an upper welding unit including an upper welding rod, a first object to be joined located under the upper welding rod, a second object to be joined located under the first object to be joined, and a lower welding unit including a lower welding rod located under the second object to be joined, wherein the first object to be joined and the second object to be joined are welded to each other by resistance welding using the upper welding rod and the lower welding rod, and a displacement measurement unit configured to measure displacement of a buffer portion provided on at least one of an upper end of the upper welding rod or a lower end of the lower welding rod by further pressing in the state in which the upper welding rod, the first object to be joined, the second object to be joined, and the lower welding rod face each other in tight contact with each other.

The upper welding unit may include a welding unit body located above, the welding unit body being provided with a moving portion configured to move and fix an entirety of the upper welding unit, and the buffer portion located between the welding unit body and the upper welding rod, the length of the buffer portion between the welding unit body and the upper welding rod varying in response to pressure applied to the upper welding rod.

The upper welding unit may include a welding rod jig configured to fix the upper welding rod, a welding rod receiving portion configured to receive and fix the welding rod jig, a welding unit body located above, the welding unit body being provided with a moving portion configured to move and fix the entirety of the upper welding unit, and a buffer portion located between the welding unit body and the welding rod receiving portion, the length of the buffer portion between the welding unit body and the welding rod receiving portion varying in response to pressure applied to the upper welding rod.

The displacement measurement unit may include a measurement dog attached to the welding rod receiving portion and a displacement sensor attached to the welding unit body, the displacement sensor being configured to measure the distance to the measurement dog.

The displacement sensor may measure displacement using a physical tip or a laser. The displacement sensor may be fixed to the welding unit body by a sensor fixing portion. In addition, the value measured by the displacement sensor may be digitally converted and transmitted.

In addition, the present invention provides a negative electrode tab resistance welding apparatus for cylindrical batteries, including a cylindrical battery having a jelly-roll electrode assembly received therein, a jig configured to fix a lower part of the cylindrical battery, and the welding apparatus according to the present invention, wherein the first object to be joined is a negative electrode tab, and the second object to be joined is a lower bottom of a cylindrical can.

Welding may be performed in the state in which the upper welding rod extends through a central part of the jelly-roll electrode assembly.

A visual device configured to observe an end of the upper welding rod may be added.

In addition, the present invention provides a negative electrode tab resistance welding method for cylindrical batteries using the negative electrode tab resistance welding apparatus for cylindrical batteries, including a first step of fixing a cylindrical battery having a jelly-roll electrode assembly received therein to the jig, a second step of moving each of the upper welding rod and the lower welding rod to bring the upper welding rod, the negative electrode tab, the lower bottom of the cylindrical can, and the lower welding rod into tight contact with each other, a third step of further pressing the upper welding rod and adjusting the degree of pressing of the upper welding rod such that a desired displacement value is output from the displacement measurement unit while measuring displacement of the buffer portion in response thereto using the displacement measurement unit, and a fourth step of performing resistance welding after adjusting the degree of pressing of the upper welding rod in the third step.

In addition, the present invention provides a cylindrical battery welded by the negative electrode tab resistance welding apparatus for cylindrical batteries.

In addition, the present invention may provide arbitrary combinations of the above solving means.

### [Advantageous Effects]

The present invention provides a welding apparatus including an upper welding unit including an upper welding rod, a first object to be joined located under the upper welding rod, a second object to be joined located under the first object to be joined, and a lower welding unit including a lower welding rod located under the second object to be joined, wherein the first object to be joined and the second object to be joined are welded to each other by resistance welding using the upper welding rod and the lower welding rod, and the welding apparatus further includes a displacement measurement unit configured to measure the displacement of a buffer portion provided on at least one of an upper end of the upper welding rod or a lower end of the lower welding rod by further pressing in the state in which the upper welding rod, the first object to be joined, the second object to be joined, and the lower welding rod face each other in tight contact with each other.

In addition, the present invention is capable of checking or measuring the degree of overlap, which is an important factor in resistance welding of a cylindrical battery, whereby it is possible to provide consistent-quality welding results.

### [Description of Drawings]

FIG. 1 is an exploded sectional view of a cylindrical battery and a conventional resistance welding apparatus.
FIG. 2 is a sectional view showing that welding is performed in a state in which a conventional resistance welding apparatus is coupled to a cylindrical battery.
FIG. 3 is a schematic view of an upper part of a conventional resistance welding apparatus.
FIG. 4 is an exploded sectional view of a cylindrical battery and a resistance welding apparatus according to the present invention.
FIG. 5 is a sectional view showing that welding is performed in a state in which a resistance welding apparatus according to the present invention is coupled to a cylindrical battery.
FIG. 6 is a schematic view showing a measurement of a displacement of an upper part of a resistance welding apparatus according to the present invention.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

In addition, a description to embody elements through limitation or addition may be applied to all inventions, unless particularly restricted, and does not limit a specific invention.

Also, in the description of the invention and the claims of the present application, singular forms are intended to include plural forms unless mentioned otherwise.

Also, in the description of the invention and the claims of the present application, "or" includes "and" unless mentioned otherwise. Therefore, "including A or B" means three cases, namely, the case including A, the case including B, and the case including A and B.

In addition, all numeric ranges include the lowest value, the highest value, and all intermediate values therebetween unless the context clearly indicates otherwise.

Embodiments of the present invention will be described in detail with reference to the drawings.

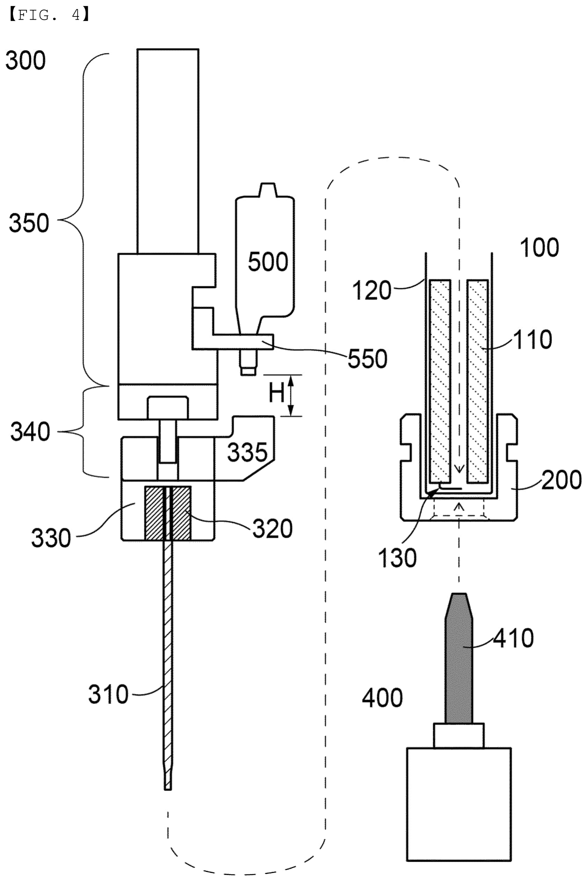

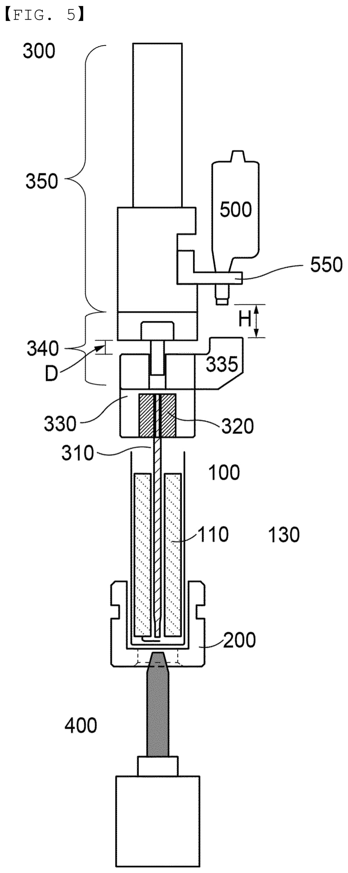

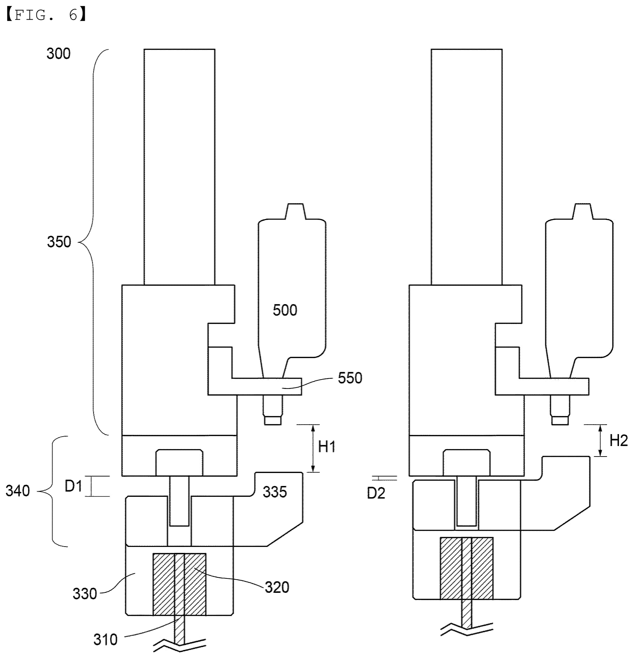

FIG. 4 is an exploded sectional view of a cylindrical battery and a resistance welding apparatus according to the present invention, FIG. 5 is a sectional view showing that welding is performed in the state in which the resistance welding apparatus according to the present invention is coupled to the cylindrical battery, and FIG. 6 is a schematic view showing the measurement of the displacement of an upper part of the resistance welding apparatus according to the present invention.

Referring to FIGs. 4 to 6, the present invention relates to a welding apparatus including an upper welding unit 300 including an upper welding rod 310, a first object 130 to be joined located under the upper welding rod 310, a second object 125 to be joined located under the first object 130 to be joined, and a lower welding unit 400 including a lower welding rod 410 located under the second object 125 to be joined, wherein the first object 130 to be joined and the second object 125 to be joined are welded to each other by resistance welding using the upper welding rod 310 and the lower welding rod 410, and the welding apparatus further includes a displacement measurement unit 600 configured to measure the displacement of a buffer portion 340 provided on at least one of an upper end of the upper welding rod 310 or a lower end of the lower welding rod 410 by further pressing in the state in which the upper welding rod 310, the first object 130 to be joined, the second object 125 to be joined, and the lower welding rod 410 face each other in tight contact with each other.

The upper welding unit 300 includes a welding rod jig 320 configured to fix the upper welding rod 310, a welding rod receiving portion 330 configured to receive and fix the welding rod jig 320, a welding unit body 350 located above, the welding unit body being provided with a moving portion (not shown) configured to move and fix the entirety of the upper welding unit 300, and a buffer portion 340 located between the welding unit body 350 and the welding rod receiving portion 330, the length of the buffer portion between the welding unit body 350 and the welding rod receiving portion 330 varying in response to pressure applied to the upper welding rod 310.

The welding rod jig 320 allows the upper welding rod 310, which has a constant length, to be inserted thereinto to a constant depth and fixed thereto. The welding rod jig 320 may be fixed to the welding rod receiving portion 330 by clamping.

The displacement measurement unit 600 includes a measurement dog 335 attached to the welding rod receiving portion 330 and a displacement sensor 500 attached to the welding unit body 350 to measure the distance to the measurement dog 335. The positions of the measurement dog 335 and the displacement sensor 500 may be reversed.

The displacement sensor 500 may measure the displacement using a physical tip or a laser. The displacement sensor 500 is fixed to the welding unit body 350 by a sensor fixing portion 550. In addition, the value measured by the displacement sensor 500 is digitally converted and transmitted.

In addition, the present invention relates to a negative electrode tab resistance welding apparatus for cylindrical batteries, the negative electrode tab resistance welding apparatus including a cylindrical battery 100 having a jelly-roll electrode assembly 110 received therein, a jig 200 configured to fix a lower part of the cylindrical battery 100, and the welding apparatus according to the present invention, wherein the first object to be joined is a negative electrode tab 130 and the second object to be joined is a lower bottom 125 of a cylindrical can.

Welding is performed in the state in which the upper welding rod 310 extends through a central part of the jelly-roll electrode assembly 110.

A visual device (not shown) configured to observe the end of the upper welding rod 310 may be added. Since resistance welding is typically performed as welding, the length of the upper welding rod 310 decreases as welding proceeds. However, in the present invention, the upper welding rod 310 is replaced if the end of the upper welding rod 310 changes from an even state to an uneven state before the length of the upper welding rod decreases. Therefore, it may be assumed that the length of each upper welding rod 310 is uniform during the actual welding process. The upper welding rod 310 may be replaced by observing the surface of the end of the upper welding rod or by observing the welding state. The end of the upper welding rod 310 is continuously observed using a visual device such as a camera, and it is preferable to replace the upper welding rod before the surface of the end of the upper welding rod becomes rough, because welding is not properly performed when the surface of the end of the upper welding rod is rough.

In addition, the present invention relates to a method of resistance welding a negative electrode tab 130 of a cylindrical battery 100 using the negative electrode tab resistance welding apparatus for cylindrical batteries, the method including a first step of fixing a cylindrical battery 100 having a jelly-roll electrode assembly 110 received therein to the jig 200, a second step of moving each of the upper welding rod 310 and the lower welding rod 410 to bring the upper welding rod 310, the negative electrode tab 130, the lower bottom 125 of the cylindrical can, and the lower welding rod 410 into tight contact with each other, a third step of further pressing the upper welding rod 410 and adjusting the degree of pressing of the upper welding rod 310 such that a desired displacement value is output from the displacement measurement unit 600 while measuring the displacement of the buffer portion 340 in response thereto using the displacement measurement unit 600, and a fourth step of performing resistance welding after adjusting the degree of pressing of the upper welding rod 310 in the third step.

The change D1-D2 of the buffer portion is equal to the change H1-H2 of the displacement value. Consequently, it is possible to determine the actual change of the buffer portion through the displacement value.

Those skilled in the art to which the present invention pertains will appreciate that various applications and modifications are possible within the category of the present invention based on the above description.

### (Description of Reference Symbols)

100: Cylindrical battery
110: Jelly-roll electrode assembly
120: Cylindrical can
125: Lower bottom of cylindrical can, second object to be joined
130: Negative electrode tab, first object to be joined
200: Jig
300: Upper welding unit
310: Upper welding rod
320: Welding rod jig
330: Welding rod receiving portion
335: Measurement dog
340: Buffer portion
350: Welding unit body
550: Sensor fixing portion
400: Lower welding unit
410: Lower welding rod
500: Displacement sensor
600: Displacement measurement unit (335, 500)
D, D1, D2: Lengths of buffer portion
H1, H2: Displacement values

## Claims

1. A welding apparatus comprising:
an upper welding unit comprising an upper welding rod;
a first object to be joined located under the upper welding rod;
a second object to be joined located under the first object to be joined; and
a lower welding unit comprising a lower welding rod located under the second object to be joined, wherein the first object to be joined and the second object to be joined are welded to each other by resistance welding using the upper welding rod and the lower welding rod; and
a displacement measurement unit configured to measure displacement of a buffer portion provided on at least one of an upper end of the upper welding rod or a lower end of the lower welding rod by further pressing in a state in which the upper welding rod, the first object to be joined, the second object to be joined, and the lower welding rod face each other in tight contact with each other.

2. The welding apparatus according to claim 1, wherein the upper welding unit comprises:
a welding unit body located above, the welding unit body being provided with a moving portion configured to move and fix an entirety of the upper welding unit; and
the buffer portion located between the welding unit body and the upper welding rod, a length of the buffer portion between the welding unit body and the upper welding rod varying in response to pressure applied to the upper welding rod.

3. The welding apparatus according to claim 1, wherein the upper welding unit comprises:
a welding rod jig configured to fix the upper welding rod;
a welding rod receiving portion configured to receive and fix the welding rod jig;
a welding unit body located above, the welding unit body being provided with a moving portion configured to move and fix the entirety of the upper welding unit; and
the buffer portion located between the welding unit body and the welding rod receiving portion, a length of the buffer portion between the welding unit body and the welding rod receiving portion varying in response to pressure applied to the upper welding rod.

4. The welding apparatus according to claim 3, wherein the displacement measurement unit comprises:
a measurement dog attached to the welding rod receiving portion; and
a displacement sensor attached to the welding unit body, the displacement sensor being configured to measure a distance to the measurement dog.

5. The welding apparatus according to claim 4, wherein the displacement sensor measures displacement using a physical tip or a laser.

6. A negative electrode tab resistance welding apparatus for cylindrical batteries, comprising:
a cylindrical battery having a jelly-roll electrode assembly received therein;
a jig configured to fix a lower part of the cylindrical battery; and
the welding apparatus according to any one of claims 1 to 4, wherein
the first object to be joined is a negative electrode tab, and
the second object to be joined is a lower bottom of a cylindrical can.

7. The negative electrode tab resistance welding apparatus according to claim 6, wherein welding is performed in a state in which the upper welding rod extends through a central part of the jelly-roll electrode assembly.

8. The negative electrode tab resistance welding apparatus according to claim 6, wherein a visual device configured to observe an end of the upper welding rod is added.

9. A negative electrode tab resistance welding method for cylindrical batteries using the negative electrode tab resistance welding apparatus according to claim 6, comprising:
a first step of fixing a cylindrical battery having a jelly-roll electrode assembly received therein to the jig;
a second step of moving each of the upper welding rod and the lower welding rod to bring the upper welding rod, the negative electrode tab, the lower bottom of the cylindrical can, and the lower welding rod into tight contact with each other;
a third step of further pressing the upper welding rod and adjusting a degree of pressing of the upper welding rod such that a desired displacement value is output from the displacement measurement unit while measuring displacement of the buffer portion in response thereto using the displacement measurement unit; and
a fourth step of performing resistance welding after adjusting the degree of pressing of the upper welding rod in the third step.

10. A cylindrical battery welded by the negative electrode tab resistance welding apparatus according to claim 6.
